# EUROPÄISCHE PATENTANMELDUNG

(11) **EP 0 868 106 A2**
(43) Veröffentlichungstag der Anmeldung: **30.09.1998**
(21) Anmeldenummer: 98104804.4
(22) Anmeldetag: 17.03.1998
(51) Int. Cl.: H04Q 11/04, H04J 3/06

(54) **Verfahren zur Übertragung von Datenblöcken und Datensignalen**

(30) Priorität: 24.03.1997 DE 19712264
(71) Anmelder: SIEMENS AKTIENGESELLSCHAFT, 80333 München (DE)
(72) Erfinder: Heiles, Jürgen, 81371 München (DE)

(57) **Zusammenfassung**

Dieses Verfahren zur Übertragung fügt Datenblöcke (TU-12, TU-2) niedrigerer Ebenen entsprechend den ITU-Empfehlungen in Datenblöcke (VC-4) einer höheren Ebene ein. Der Rest der Übertragungskapazität steht für die Übertragung von beliebigen Datensignalen (DS1 ... DSn), beispielsweise ATM-Zellen (ATM), zur Verfügung.

## Beschreibung

Die Erfindung betrifft ein Verfahren zur Übertragung von standardisierten Datenblöcken niedriger Ebene und von nicht diesem Standard zugehörigen Datensignalen in einem standardisierten Datenblock einer höheren Ebene.

sind in den ITU-Recommandations G.707 bis 709 (1991 In synchronen Übertragungssystemen, beispielsweise der 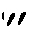 Synchronen Digitalen der Hierarchie 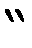 (SDH), werden Datenblöcke einer niedrigeren Ebene zu Datenblöcken einer höheren Ebene zusammengefügt, mit einem Overhead versehen und übertragen. Einzelheiten) geregelt.

Das Einfügen von ATM-Zellen (Asynchronous Transfer Mode) ist in der G.709, 5.8 geregelt. Eine gemischte Übertragung von Datenblöcken (Virtuel Containers VC, Tributary Units TU) und von ATM-Signalen ist dagegen weder bekannt noch festgelegt. Deshalb wäre Eine gemischte Übertragung wäre zur Zeit nur möglich, indem man die ATM-Zellen wiederum in mehrere Datenblöcke der niedrigeren Ebene verpackt. Das Aufteilen der ATM-Zellen auf mehrere Datenblöcke verringert aber die Effizienz des statistischen Multiplexens, d.h. der Ausnutzung der gesamten Übertragungskapazität eines Kanals durch schwankende Übertragungskapazitäten der unterschiedlichen Teilnehmer. Bei einer jetzt notwendigen Aufteilung der ATM-Signale einzelner Teilnehmer muß dafür gesorgt werden, daß jedem Teilnehmer ein bestimmter virtueller Übertragungskanal in Form eines Datenblocks niedriger Ordnung zur Verfügung steht. Die Zusammenfassung mehrerer virtualer Container zu einem größerem Container ist auch nur für den Container VC-2 definiert und nur mit größerem Aufwand möglich.

Aufgabe der Erfindung ist es, ein Verfahren zur gemischten Übertragung von standardisierten Datenblöcken einer niedrigen Ebene und nicht diesem Standard entsprechenden Datensignalen wie ATM-Signale anzugeben, das die vorhandene Übertragungskapazität ausnutzt.

Diese Aufgabe wird durch das im Patentanspruch 1 angegebene Verfahren gelöst.

Der große Vorteil dieses Verfahrens ist es, daß die gesamte nicht belegte Übertragungskapazität zur Übertragung eines oder auch mehrerer Digitalsignale zur Verfügung steht. Die Aufteilung des ATM-Datenstroms in viele Datenblöcke der niedrigeren Ebene entfällt. Damit verringert sich der Aufwand und die Effiziens des statistischen Multiplexens wird erhöht. Außerdem wird zusätzliche Übertragungskapazität durch den Wegfall von Pointern usw. gewonnen.

Selbstverständlich können auch mehrere Digitalsignale übertragen werden. Als kleinste Granularität ist ein Byte je Datenblock höherer Ebene möglich.

Für fest geschaltete Verbindungen kann die Aufteilung der gesamten Übertragungskapazität in Datenblöcke und mindestens ein Digitalsignal (beispielsweise ATM-Signal) hardwaremäßig realisiert werden. Bei flexiblen Verbindungen kann diese Aufteilung im Rahmen der vorgegebenen hardwaremäßigen Möglichkeiten durch eine zentrale Steuerung geändert werden.

Eine weitere Möglichkeit zur Anderung der Aufteilung besteht in der Übertragung der entsprechenden Information im Overhead. Hier kann auch die Art der Digitalsignale und der Aufteilung angegeben werden.

Die Erfindung wird anhand von Beispielen näher erläutert.

Es zeigen:
- Figur 1: eine schematische Darstellung der Sendeeinrichtung und Empfangseinrichtung
- Figur 2: die Belegung eines Datenblockes mit Datenblöcken einer niedrigeren Ebene und einem Datensignal,
- Figur 3: eine andere Belegung mit Datenblöcken und mit mehreren Datensignalen und
- Figur 4: ein ringförmiges Datennetz.

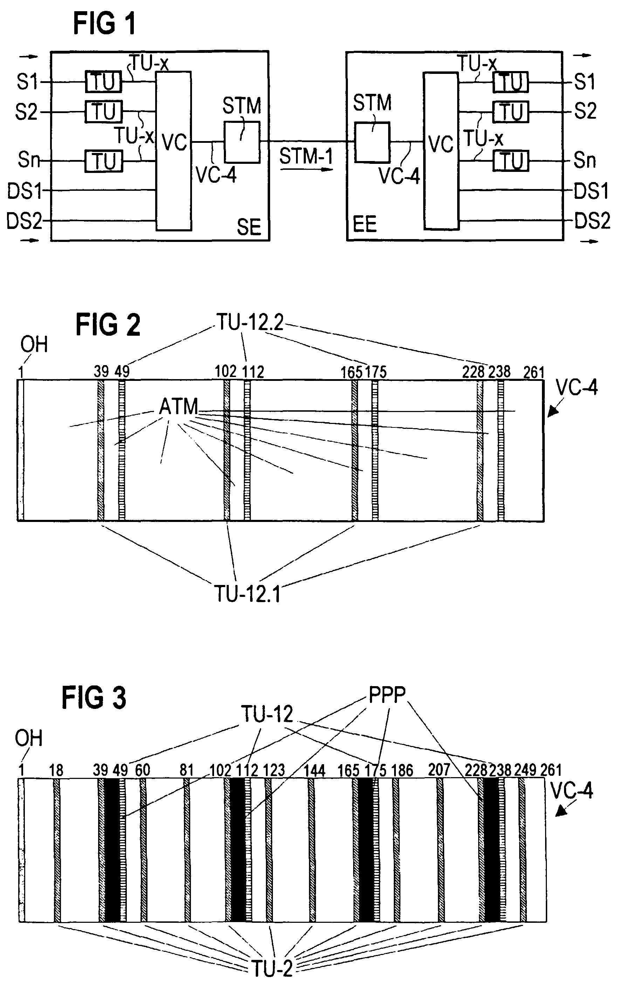

In **Figur 1** ist eine vereinfachte Sendeeinrichtung SE und eine Empfangseinrichtung EE für die Übertragung in einer Richtung schematisch dargestellt. In der Sendeeinrichtung SE werden mehrere digitale Signale S1, S2 bis Sn jeweils in einem Funktionsblock TU in standardisierte Datenblöcke TU-x (x = 11, 12, 2, ...) eingefügt. Diese werden dann (in einer vereinfachten Darstellung) in einem weiteren Funktionsblock VC in einen Datenblöcke VC-4 höherer Ebene an fest vorgegebenen Positionen eingefügt. Die verbleibende Übertragungskapazität dieser Datenblöcke wird durch mindestens ein weiteres beliebig strukturiertes Datensignal DS1 zur Übertragung genutzt. In Figur 1 sind zwei Datensignale DS1 und DS2 angegeben. Jeder Datenblock höherer Ebene wird mit einem Overhead versehen und als STM-1-Signal (sychroner Transportmodul) übertragen.

In der Empfangseinrichtung EE werden die Signale S1 bis Sn und die Datensignale DS1 und DS2 ausgegeben.

In **Figur 2** wird das Einfügen der Signale S1 bis Sn (2,048 Mbit/s) bei der synchronen digitalen Hierarchie erläutert. Die Signale S1 bis Sn werden zunächst jeweils in Datenblöcke TU-x, hier TU-12, einer niedrigeren Ebene umgesetzt, die dann jeweils in einen Datenblock VC-4 einer höheren Ebene eingefügt werden.

Die erste Spalte dieses Datenblocks VC-4 enthält den Overhead OH. Das Einfügen erfolgt entsprechend den ITU-Empfehlungen; in diesem Beispiel werden nur zwei Datenblöcke TU-12.1 und 12.2 eingefügt. Jede TU-12 belegt in einem Datenblock VC-4 vier Spalten. Die erste Spalte des VC-4-Datenblocks, in die die jeweils die erste Spalte eines der TU-12-Datenblöcke eingefügt wird, ist schaltungsmäßig vorgegeben oder durch eine Steuerung festlegbar.

Die nicht ausgefüllten Spalten werden zur Übertragung eines Datensignals in Form von ATM-Zellen ATM genutzt.

In **Figur 3** wird der Datenblock VC-4 für die Übertragung von Datenblöcken zweier unterschiedlicher niedrigerer Ebenen verwendet. Das Einfügen erfolgt wieder entsprechend den ITU-Empfehlungen G.709. Der Datenblock TU-12 belegt die Spalten 49, 112, 175, 238, während der Datenblock TU-2, angefangen bei der Spalte 18, jeweils die 21-zigste folgende Spalte belegt.

In diesem Beispiel werden zur Übertragung eines ersten Datensignals, eines Protokolls PPP (Point to Point Protocol), die Spalten 40 bis 48, 103 bis 111, 166 bis 174 und 229 bis 237 genutzt.

Die nicht genutzten Spalten können wieder zur Übertragung von Datensignalen, hier wieder ATM-Zellen ATM genutzt werden. Die nach dem Einfügen der Datenblöcke niedrigerer Ebene verbleibende freie Übertragungskapazität ist zur Übertragung der Datensignale frei konfigurierbar.

Außer den in den Beispielen auftretenden Datenblöcken niedrigerer und höherer Ebene können natürlich auch die die erwähnten Datenblöcke der synchronen digitalen Hierarchie SDH, beispielsweise TU-11, TU-3 bzw. VC-3 usw. in Abhängigkeit vom Anwendungsfall genutzt werden. Das Verfahren kann ebenfalls in anderen Übertragungshierarchien angewendet werden.

Als Datensignal ist jede Art eines Datenflusses einfügbar, wenn die freie Übertragungskapazität ausreicht. Die Belegung ist über die Steuerung konfigurierbar und auch schaltungsmäßig festlegbar.

Die Information über die Art der Signale, ATM, PPP usw., kann beispielsweise auch im Overheads OH angegeben werden.

Das beschriebene Übertragungsverfahren kann bei beliebigen Netzkonfigurationen angewendet werden, beispielsweise bei ringförmig aufgebauten Netzen. Besonders vorteilhaft ist die teilnehmernahe Anwendung (Access Network), da hier mit geringem Aufwand ein Übertragungsverfahren für die unterschiedlichsten Datenformate genutzt werden kann.

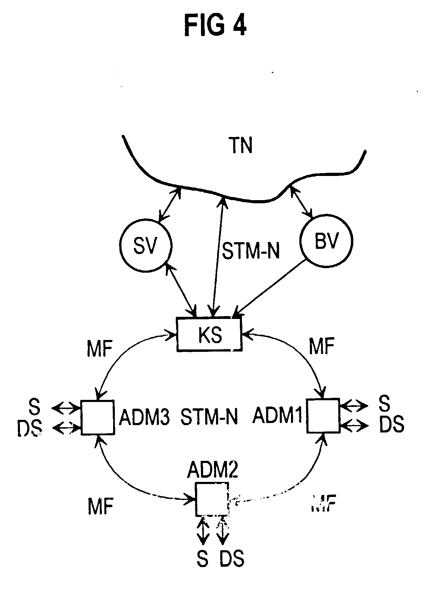

In **Figur 4** ist als Ausführungsbeispiel zur Nutzung der Erfindung ein ringförmiges Datennetz angegeben. Die Signale werden im beschriebenen "Mixed Format" MF in einem synchronen Transportmodul STM-N (N = 1, 4, 16 ...) eingefügt in einem Datenring zwischen Terminals, hier Add-Drop-Multiplexer ADM1 bis ADM3, übertragen, die die Signale S und DS einzeln auskoppeln, einkoppeln oder durchschalten können.

Von einer Kopfstation KS können die zusammengefaßten Signale in einem standardisierten Format STM-N (beispielsweise STM-1) direkt einem Transportnetzwerk TN übergeben werden. Eine Alternative hierzu ist die Auskopplung der Signale S (S1 ....Sn) mit konstanten Datenraten, die im Format der Datenblöcke TU-12 übertragen werden, und der Datensignale DS (DS1 ... DSn), die über eine Schmalband-Vermittlung SV bzw. über eine Breitband-Vermittlung BV in das Transport-Netzwerk TN eingekoppelt werden.

## Patentansprüche

1. Verfahren zur Übertragung von standardisierten Datenblöcken (TU-12.1; TU-12, TU-2) niedrigerer Ebene und mindestens einem nicht diesem Standard zugehörigen Datensignal (DS1) in einem standardisierten Datenblock (VC-4) einer höheren Ebene,
bei dem die Datenblöcke (TU-12, TU-2) der niedrigeren Ebenen in standardisierte Datenblöcke (VC-4) einer der höheren Ebene eingefügt werden und die übrige Übertragungskapazität der standardisierten Datenblöcke (VC-4) der höheren Ebene ganz oder teilweise zur Übertragung des mindestens einen Datensignals (DS1) genutzt wird.

2. Verfahren nach Anspruch 1,
**dadurch gekennzeichnet,**
daß die Belegung mit Datenblöcken (TU-12, TU-2) niedrigerer Ordnung und mit Datensignalen (DS1, DS2, ATM) von einer zentralen Steuerung in einer Sendeeinrichtung (SE) und einer Empfangseinrichtungen (EE) festgelegt wird.

3. Verfahren nach Anspruch 1,
**dadurch gekennzeichnet,**
daß die Sendeeinrichtung (SE) und die Empfangseinrichtung (EE) schaltungsmäßig für eine bestimme feste Belegung mit Datenblöcken (TU-12, TU-2) der niedrigen Ebene ausgerichtet ist.

4. Verfahren nach Anspruch 1,
**dadurch gekennzeichnet,**
daß Informationen über die Art der Belegung mit Datenblöcken der niedrigen Ebene und/oder Datensignalen (DS1; DS2) im Overhead der Datenblöcke (VC-4) höherer Ebene übertragen wird.

5. Verfahren nach einem der vorhergehenden Ansprüche,
**dadurch gekennzeichnet,**
daß Datenblöcke (TU-12, TU-2, VC-4) der "Synchronen-Digital-Hierarchie (SDH) 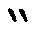 übertragen werden.

6. Verfahren nach einem der vorhergehenden Ansprüche,
**dadurch gekennzeichnet,**
daß als Datensignale (DS1, DS2) ATM-Zellen (ATM) übertragen werden.

7. Verfahren nach einem der vorhergehenden Ansprüche,
**dadurch gekennzeichnet,**
daß jedes Datensignal (DS1, DS2) in jedem Datenblock höherer Ebene ein Byte oder ein mehrfaches eines Bytes belegt.
